# EUROPEAN PATENT SPECIFICATION

(11) **EP 2 387 099 B1**
(45) Date of publication and mention of the grant of the patent: **03.01.2018**
(21) Application number: 11165286.3
(22) Date of filing: 09.05.2011
(51) Int. Cl.: H01Q 1/12, H01Q 1/38, H01Q 9/42, H01R 9/05, H01R 12/69, H01R 103/00

(54) **Wireless communication system**
Drahtloses Kommunikationssystem
Système de communication sans fil

(30) Priority: 10.05.2010 US 776790
(43) Date of publication of application: 16.11.2011
(73) Proprietor: TE Connectivity Corporation, Berwyn, PA 19312 (US)
(72) Inventor: Hornung, Craig Warren, Harrisburg, PA 17112 (US)
(74) Representative: Ashton, Gareth Mark

(56) References cited:
- DE-U1-202004 004 622
- US-A1- 2008 143 635
- US-B1- 6 350 145

## Description

The invention relates to a flexible antenna terminated to a coaxial cable. The flexible antenna forms part of a wireless communication system.

Wireless communication systems are in use and have a wide variety of applications including voice communication, data communication, and the like. For example, wireless communication systems may be used to communicate between cell phone towers and mobile phone. Wireless communication systems may be used to transfer data wirelessly between a router and a computer. Other examples of wireless communication systems include GPS systems, radio systems, PDAs, cell phones, data networks such as a LAN, and the like. Wireless communication systems typically include an antenna coupled to a wireless device by a cable. The wireless device includes a transmitter and/or a receiver. Size constraints due to miniaturization demand ultra small coaxial interconnects. In systems today, the coaxial cable is connected to the antenna using solder or a conductive epoxy connection. In other systems, a small coaxial receptacle is soldered to the antenna and a plug is crimped to the wire which is inserted into the receptacle. Both systems utilize solder or epoxy at some interface between the coaxial cable and the antenna. The amount of material between the coaxial cable and the antenna changes the electrical properties of the interface, thereby changing the RF performance of the system. As transmission speeds increase, the negative impact on the electrical properties of the interface is exaggerated.

Some wireless communication systems desire the use of flex circuits within the antenna. Electrical connections to flex circuits in antennas have heretofore proven difficult. Additionally, with miniaturization, connection to flexible circuits has proven difficult. For example, the flexible base material of the flex circuit may be damaged by the high solder melt temperatures required for solder attachment of the coaxial cable to the antenna. Some flexible materials such as KAPTON® are known that can withstand the high temperature of solder; however, such materials are costly.

A need remains for a wireless communication system that utilizes a flex circuit as an antenna.

US 2008/0143635 discloses a retainer adapted for retaining a coaxial cable on a planar antenna. The retainer comprises a C-shaped clamp for clamping an outer conductor of the coaxial cable, and a connecting member adapted to be connected electrically to the planar antenna.

According to the invention, there is provided an antenna according to any one of the appended claims 1 to 4, and a wireless communication system comprising the antenna according to claim 5.

Embodiments of the invention will now be described by way of example and with reference to the accompanying drawings wherein:
Figure 1 is a top perspective view of a wireless communication system formed in accordance with an embodiment of the invention.
Figure 2 is an exploded view of an antenna for the wireless communication system shown in Figure 1.
Figure 3 is a bottom perspective view of the antenna shown in Figure 2.
Figure 4 is a cross sectional view of the antenna shown in Figure 2.
Figure 5 is a top perspective view of an alternative antenna for the wireless communication system.

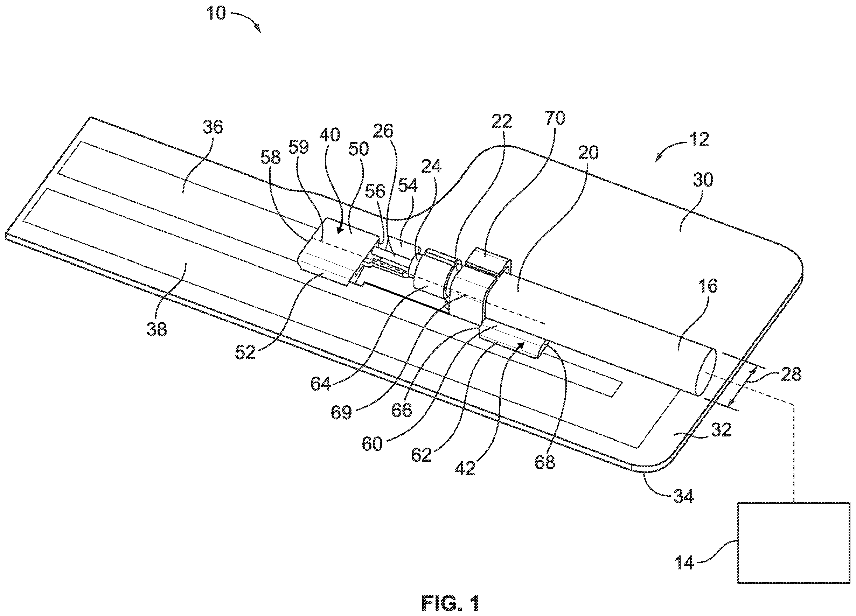

Figure 1 illustrates a wireless communication system 10 formed in accordance with an embodiment of the invention. The wireless communication system 10 includes an antenna 12 connected to a wireless device 14 by a cable 16. The wireless device 14 may be any type of wireless device, such as a mobile antenna, a GPS, a radio system, a PDA, a cellular handset, or other type of wireless communication systems, such as a LAN. The wireless device 14 is illustrated in Figure 1 schematically, and may include any structural features depending on the particular application. The cable 16 connecting the wireless device 14 and the antenna 12 may have any length.

The cable 16 is a coaxial cable having an outer jacket 20, a cable braid 22, a dielectric 24 and a center conductor 26. The dielectric 24 surrounds the center conductor 26 and isolates the center conductor 26 from the cable braid 22. The cable braid 22 circumferentially surrounds the dielectric 24. The outer jacket 20 circumferentially surrounds the cable braid 22 and defines the outer surface of the cable 16. The cable 16 has a diameter 28 defined by the outer jacket 20. The diameter 28 may be extremely small. For example, the diameter 28 may be less than 1 mm, such as 0.8mm (0.030 inches). Other diameters are possible in alternative embodiments.

The antenna 12 includes a flexible film substrate 30 having a first surface 32 and a second surface 34 opposite the first surface 32. The flexible film substrate 30 has a signal element 36 and a ground element 38 on the first surface 32. The signal and ground elements 36, 38 may be represented by conductors or traces routed along the first surface 32 of the flexible film substrate 30. The positioning of the signal and ground elements 36, 38 along the first surface 32 may be selected to control electrical characteristics and properties of the antenna 12. Similarly, the lengths and widths of the signal and ground elements 36, 38 may be selected to control the electrical characteristics of the antenna 12. The spacing between the signal and ground elements 36, 38 may be selected to control electrical characteristics of the antenna 12. The overall size, shape, and thickness of the flexible film substrate 30 may also be selected to control the electrical characteristics of the antenna 12.

The flexible film substrate 30 may be any type of flexible substrate. The flexible film substrate 30 may be manufactured from a plastic material, such as a polyimide material, a PEEK material, a polyester material, a polyethylene terephthalate (PET) material, and the like, a paper material, or any other suitable material for a flexible film substrate. The signal and ground elements 36, 38 may be deposited on the first surface 32, such as by a screen printing process, an inkjet process, a gravure process, and the like. As such, the flexible film substrate 30 of the illustrated embodiment may constitute a flexible printed circuit. In an alternative embodiment, flexible foil circuits may be created by laminating thin copper strips between layers of flexible material. The flexible film substrate 30 may be configured to flex during its normal use, such as by folding or bending the flexible film substrate 30 to fit within a particular space or area of the wireless device 14.

The antenna 12 includes a signal contact 40 and ground contact 42. The signal contact 40 is mounted to the flexible film substrate 30 and is electrically connected to the signal element 36. The ground contact 42 is mounted to the flexible film substrate 30 and is electrically connected to the ground element 38. The signal contact 40 and ground contact 42 are mechanically connected to the flexible film substrate 30. The signal contact 40 and ground contact 42 may be mounted to the flexible film substrate 30 without the use of solder or epoxy. The signal contact 40 and ground contact 42 may be connected to the signal element 36 and ground element 38, respectively, by compression connections, wherein the signal and ground contacts 40, 42 are pressed against the signal and ground elements 36, 38 in direct electrical contact with the signal and ground elements 36, 38, respectively.

The signal contact 40 includes a base 50 and mounting elements 52 used to secure the signal contact 40 to the flexible film substrate 30. The base 50 is electrically connected to the signal element 36. In an exemplary embodiment, as will be described in further detail below, the mounting elements 52 mechanically secure the signal contact 40 to the flexible film substrate 30. For example, the mounting elements 52 may pierce through the flexible film substrate 30 and wrap around the second surface 34 of the flexible film substrate 30. Other types of mechanical fastening means or processes may be used in other embodiments to mechanically secure the signal contact 40 to the flexible film substrate 30.

The signal contact 40 includes a wire termination 54 extending from the base 50. The wire termination 54 is configured to be terminated to the center conductor 26 of the cable 16. In the illustrated embodiment, the wire termination 54 constitutes a crimp type connection where the wire termination 54 is crimped to the center conductor 26. The wire termination 54 extends from a first end 56 of the base 50 which is opposite to a second end 58 of the base 50. The signal contact 40 extends along a longitudinal axis 59, with the wire termination 54 extending from the base 50 and also extending along the longitudinal axis 59. The longitudinal axis 59 is parallel to the signal element 36. Figure 1 illustrates the wire termination 54 in an unterminated state. Other types of wire terminations are possible in alternative embodiments, including insulation displacement terminations.

The ground contact 42 includes a base 60 and mounting elements 62 used to secure the ground contact 42 to the flexible film substrate 30. The base 60 is electrically connected to the ground element 38. In an exemplary embodiment, as will be described in further detail below, the mounting elements 62 mechanically secure the ground contact 42 to the flexible film substrate 30. For example, the mounting elements 62 may pierce through the flexible film substrate 30 and wrap around the second surface 34 of the flexible film substrate 30. Other types of mechanical fastening means or processes may be used in other embodiments to mechanically secure the ground contact 42 to the flexible film substrate 30.

The ground contact 42 includes a wire termination 64 extending from the base 60. The wire termination 64 is configured to be terminated to the cable braid 22 of the cable 16. In the illustrated embodiment, the wire termination 64 constitutes a crimp type connection where the wire termination 64 is crimped to the cable braid 22. The wire termination 64 extends from a first end 66 of the base 60 which is opposite to a second end 68 of the base 60. The ground contact 42 extends along a longitudinal axis 69, with the wire termination 64 extending from the base 60 and also extending along the longitudinal axis 69. The longitudinal axis 69 is parallel to the ground element 38. In an exemplary embodiment, the longitudinal axis 69 of the ground contact 42 is aligned with the longitudinal axis 59 of the signal contact 40. As such, the cable 16 may be easily loaded into the wire termination 54, the wire termination 64 and a strain relief element 70 of the ground contact 42. Figure 1 illustrates the wire termination 64 in a terminated state. Other types of wire terminations are possible in alternative embodiments, including insulation displacement terminations.

The ground contact 42 includes the strain relief element 70, which is configured to engage the jacket 20 of the cable 16. In the illustrated embodiment, the strain relief element 70 represents a crimp type connection for crimping to the jacket 20. Other types of strain relief elements may be used in alternative embodiments to engage the jacket 20 and provide strain relief for the cable 16. The strain relief element 70 helps to maintain a relative position of the jacket 20 with respect to the inner portions of the cable 16, such as the center conductor 26 and the cable braid 22.

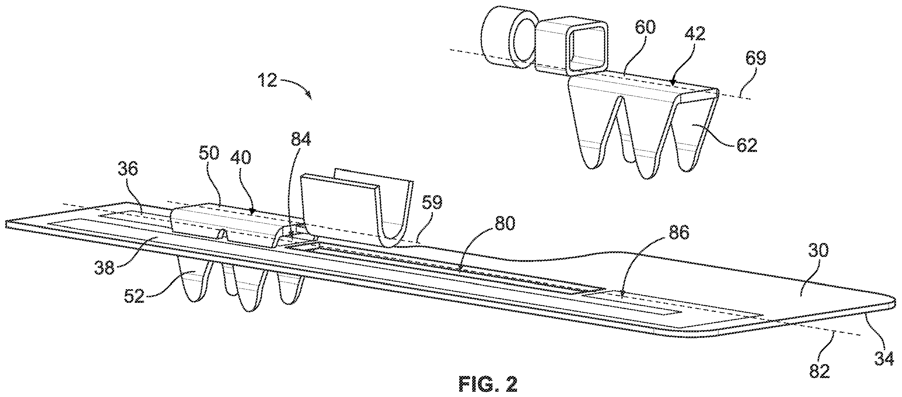

Figure 2 is an exploded view of the antenna 12. The flexible film substrate 30 includes an opening 80 therethrough. The opening 80 is aligned with the signal and ground elements 36, 38. In an exemplary embodiment, the signal and ground elements 36, 38 are aligned with one another along a common axis 82. The opening 80 is also aligned with the axis 82. The axis 82 is parallel to the longitudinal axes 59, 69 of the signal and ground contacts 40, 42.

The signal element 36 includes a mounting portion 84 at an end of the signal element 36. The mounting portion 84 is positioned proximate to the opening 80. The ground element 38 includes a mounting portion 86 at an end of the ground element 38. The mounting portion 86 is positioned proximate to the opening 80.

The signal contact 40 is configured to be mounted to the flexible film substrate 30 such that the signal contact 40 engages the mounting portion 84. The ground contact 42 is configured to be mounted to the flexible film substrate 30 such that the ground contact 42 engages the mounting portion 86. The mounting portions 84, 86, and thus the signal and ground contacts 40, 42 are aligned with one another along the axis 82, such that the signal contact 40 and the ground contact 42 are configured to receive the cable 16 (shown in Figure 1).

In the illustrated embodiment, the signal contact 40 is illustrated partially mounted to the flexible film substrate 30. The signal contact 40 is not fully seated on the flexible film substrate 30. The ground contact 42 is illustrated in an un-mounted position vertically above the flexible film substrate 30. The ground contact 42 is aligned over the ground element 38 of the flexible film substrate 30. During assembly, the signal and ground contacts 40, 42 are loaded on to the flexible film substrate 30 and secured thereto. For example, the mounting elements 52, 62 are used to secure the signal contact 40 and ground contact 42, respectively, to the flexible film substrate 30.

In the illustrated embodiment, the mounting elements 52 constitute barbs that are configured to pierce through the flexible film substrate 30. Figure 2 illustrates the signal contact 40 partially mounted to the flexible film substrate 30. During assembly, the mounting elements 52 are loaded through the flexible film substrate 30, and the signal contact 40 is pressed down on to the flexible film substrate 30 until the base 50 engages the signal element 36. The mounting elements 52 may have points at distal ends thereof that allow the mounting elements 52 to pierce the flexible film substrate 30. Alternatively, the flexible film substrate 30 may have slots or openings formed therethrough that receive the mounting elements 52. When loaded onto the flexible film substrate 30, the mounting elements 52 are configured to engage the second surface 34 of the flexible film substrate 30. The engagement of the mounting elements 52 to the second surface 34 retains the signal contact 40 on the flexible film substrate 30.

The mounting elements 52 may be folded or wrapped underneath the signal element 36 along the second surface 34. For example, the mounting elements 52 may be bent inward, such as in a manner similar to a staple, to secure the signal contact 40 to the flexible film substrate 30. In an alternative embodiment, one or both of the mounting elements 52 may be flared outward rather than bent inward to secure the signal contact 40 to the flexible film substrate 30. Alternatively, the mounting elements 62 may be rolled under the flexible film substrate 30 or otherwise manipulated such that the mounting element 62 becomes enlarged beneath the flexible film substrate to resist backing out of the mounting elements from the slots so that the relative position of the ground contact 42 may be stabilized with respect to the flexible film substrate.

Any number of mounting elements 52 may be provided. In the illustrated embodiment, four mounting elements 52 are provided, with two mounting elements 52 along one side of the base 50 and two mounting elements 52 along the opposite side base 50. The mounting elements 52 may be aligned with one another across the base 50 such that the mounting elements 52 engage one another when the mounting elements 52 are folded inward. Alternatively, the mounting elements 52 may be staggered so that the mounting elements are not aligned with one another when the mounting elements 52 are bent inward.

The mounting elements 62 may be substantially similar to the mounting elements 52. For example, the mounting elements 62 may constitute barbs that are configured to pierce through the flexible film substrate 30. Figure 2 illustrates the ground contact 42 poised for mounting to the flexible film substrate 30. During assembly, the mounting elements 62 are loaded through the flexible film substrate 30, and the ground contact 42 is pressed down onto the flexible film substrate 30 until the base 60 engages the ground element 38. The mounting elements 62 may have points at distal ends thereof that allow the mounting elements 62 to pierce the flexible film substrate 30. Alternatively, the flexible film substrate 30 may have slots or openings formed therethrough that receive the mounting elements 62. The mounting elements 62 are configured to engage the second surface 34 of the flexible film substrate 30 to retain the ground contact 42 on the flexible film substrate 30. The mounting elements 62 may be folded or wrapped underneath the ground element 38 along the second surface 34. Alternatively, the mounting elements 62 may be rolled under the flexible film substrate 30 or otherwise manipulated such that the mounting element 62 becomes enlarged beneath the flexible film substrate to resist backing out of the mounting elements from the slots so that the relative position of the ground contact 42 may be stabilized with respect to the flexible film substrate.

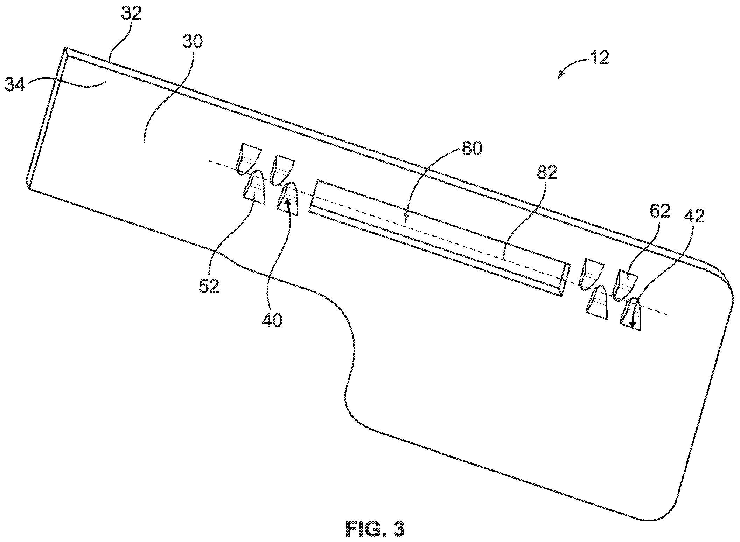

Figure 3 is a bottom perspective view of the antenna 12. The mounting elements 52 of the signal contact 40 are illustrated along the second surface 34 of the flexible film substrate 30. Similarly, the mounting elements 62 of the ground contact 42 are illustrated along the second surface 34 of the flexible film substrate 30. The mounting elements 52, 62 extend through the flexible film substrate 30 and are bent inward on top of one another. The mounting elements 52, 62 may be crimped into the folded arrangement illustrated in Figure 3. Other folding operations or processes may be used in alternative embodiments to secure the mounting elements 52, 62 to the second surface 34 of the flexible film substrate 30.

In the illustrated embodiment, wrapping the mounting elements 52, 62 under the second surface 34 forces the mounting elements 52, 62 against the second surface 34 and/or forces the corresponding bases 50, 60 (shown in Figure 2) against the first surface 32 and the signal and ground elements 36, 38, respectively. The mounting elements 52, 62 may also force the flexible film substrate 30 against the bases 50, 60 which may cause the signal element 36 and the ground element 38 to be pressed against the bases 50, 60 of the signal contact 40 and the ground contact 42, respectively. The flexible film substrate 30 may be at least partially compressed between the mounting elements 52, 62 and the bases 50, 60, respectively. Figure 3 also illustrates the opening 80 extending through the flexible film substrate 30. The mounting elements 52, 62 are aligned with the opening 80 along the axis 82.

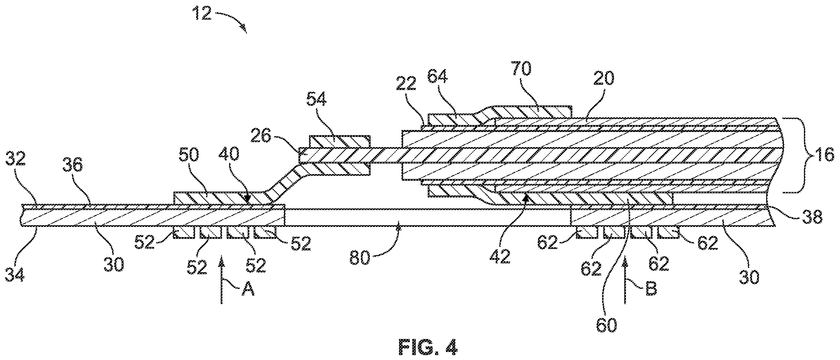

Figure 4 is a cross-sectional view of a portion of the antenna 12. Figure 4 illustrates the flexible film substrate 30 with the signal and ground elements 36, 38 along the first surface 32. Figure 4 also illustrates the first signal contact 40 mounted to the flexible film substrate 30 such that the signal contact 40 engages the signal element 36. Similarly, the ground contact 42 is mounted to the flexible film substrate 30 such that the ground contact 42 engages the ground element 38.

The wire termination 54 of the signal contact 40 is terminated to the center conductor 26. The wire termination 64 of the ground contact 42 is terminated to the cable braid 22 of the cable 16. The strain relief element 70 of the ground contact 42 is terminated to the jacket 20 of the cable 16.

The opening 80 is positioned vertically below the wire termination 54, the wire termination 64 and the strain relief element 70. In an exemplary embodiment, during assembly, tooling extends through the opening 80 to crimp the wire termination 54 to the center conductor 26, to crimp the wire termination 64 to the cable braid 22 and to crimp the strain relief element 70 to the jacket 20. For example, a crimping portion of corresponding dies are loaded through the opening 80 to engage the signal contact 40 and the ground contact 42. The opening 80 provides access to the signal contact 40 and the ground contact 42 for termination to the cable 16. The wire terminations 54, 64 are generally aligned with one another to receive the cable 16. The wire terminations 54, 64 are positioned proximate to one another, which may reduce an overall length of the cable 16 and/or affect electrical characteristics of the connection.

During assembly, when the mounting elements 52 are secured to the flexible film substrate 30, a force is applied on the mounting elements 52 in an upward direction, shown by the arrow A. Pressing of the mounting elements 52 against the second surface 34 of the flexible film substrate 30 generally compresses the signal element 36 against the signal contact 40. For example, the signal element 36 is pressed against the base 50 to ensure good electrical contact between the base 50 and the signal element 36. When assembled, the flexible film substrate 30 is captured between the base 50 and the mounting elements 52. The flexible film substrate 30 may be at least partially deflected or flexed inward when the mounting elements 52 are pressed closed. As such, a direct electrical connection is provided between the signal contact 40 and signal element 36, without the need for solder or epoxy. The signal contact 40 is mechanically self-secured to the flexible film substrate 30. No additional element or component is needed to make electrical or mechanical connection between the signal contact 40 and the signal element 36.

During assembly, when the mounting elements 62 are secured to the flexible film substrate 30, a force is applied on the mounting elements 62 in an upward direction, shown by the arrow B. Pressing of the mounting elements 62 against the second surface 34 of the flexible film substrate 30 generally compresses the ground element 38 against the ground contact 42. For example, the ground element 38 is pressed against the base 60 to ensure good electrical contact between the base 60 and the ground element 38. When assembled, the flexible film substrate 30 is captured between the base 60 and the mounting elements 62. The flexible film substrate 30 may be at least partially deflected or flexed inward when the mounting elements 62 are pressed closed. As such, a direct electrical connection is provided between the ground contact 42 and ground element 38, without the need for solder or epoxy. The ground contact 42 is mechanically self-secured to the flexible film substrate 30. No additional element or component is needed to make electrical or mechanical connection between the ground contact 42 and ground element 38.

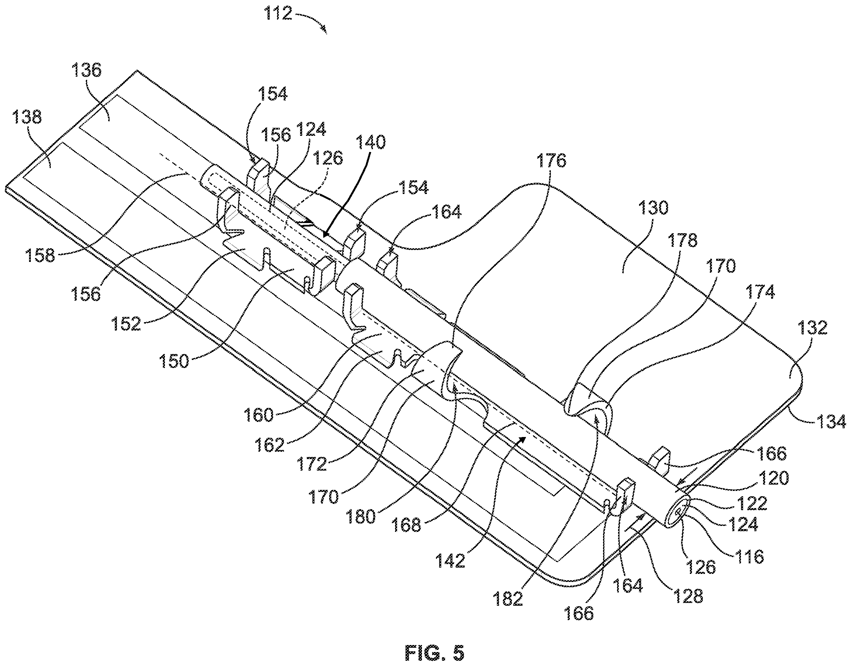

Figure 5 is a top perspective view an alternative antenna 112. The antenna 112 is configured to be connected to a wireless device, such as the wireless device 14 (shown in Figure 1) by a cable 116. The cable 116 is a coaxial cable having an outer jacket 120, a cable braid 122, a dielectric 124 and a center conductor 126 (shown in phantom). The dielectric 124 surrounds the center conductor 126 and isolates the center conductor 126 from the cable braid 122. The cable braid 122 circumferentially surrounds the dielectric 124. The outer jacket 120 circumferentially surrounds the cable braid 122 and defines the outer surface of the cable 116. The cable 116 has a diameter 128 defined by the outer jacket 120.

The antenna 112 includes a flexible film substrate 130 having a first surface 132 and a second surface 134 opposite the first surface 132. The flexible film substrate 130 may be similar to the flexible film substrate 30 (shown in Figure 1). The flexible film substrate 130 has a signal element 136 and a ground element 138 on the first surface 132. The flexible film substrate 130 may be configured to flex during its normal use, such as by folding or bending the flexible film substrate 130 to fit within a particular space or area of the electronic device 14.

The antenna 112 includes a signal contact 140 and ground contact 142. The signal contact 140 is mounted to the flexible film substrate 130 and is electrically connected to the signal element 136. The ground contact 142 is mounted to the flexible film substrate 130 and is electrically connected to the ground element 138. The signal contact 140 and ground contact 142 are mechanically connected to the flexible film substrate 130. The signal contact 140 and ground contact 142 are mounted to the flexible film substrate 130 without the use of solder or epoxy. The signal contact 140 and ground contact 142 may be connected to the signal element 136 and ground element 138, respectively, by compression connections, wherein the signal and ground contacts 140, 142 are pressed against the signal and ground elements 136, 138 in direct electrical contact with the signal and ground elements 136, 138, respectively.

The signal contact 140 includes a base 150 and mounting elements 152 used to secure the signal contact 140 to the flexible film substrate 130. The base 150 is electrically connected to the signal element 136. The mounting elements 152 may be similar to the mounting elements 52 (shown in Figure 1). The mounting elements 152 mechanically secure the signal contact 140 to the flexible film substrate 130. For example, the mounting elements 152 may pierce through the flexible film substrate 130 and wrap around the second surface 134 of the flexible film substrate 130. The mounting elements 152 may constitute barbs that are configured to pierce through the flexible film substrate 130. Other types of mechanical fastening means or processes may be used in other embodiments to mechanically secure the signal contact 140 to the flexible film substrate 130.

The signal contact 140 includes a wire termination 154 extending from the base 150. The wire termination 154 is configured to be terminated to the center conductor 126 of the cable 116. In the illustrated embodiment, the wire termination 154 constitutes an insulation displacement type connection where the center conductor 126 and dielectric 124 are loaded between barbs 156 that pierce or cut through the dielectric 124 to mechanically and electrically engage the center conductor 126. In the illustrated embodiment, the wire termination 154 includes two sets of barbs 156 spaced apart from one another. The barbs 156 mechanically and electrically connect to two different areas of the center conductor 126 for increased stability and connection. The barbs 156 may be provided at opposite ends of the base 150. Other types of wire terminations are possible in alternative embodiments, including crimp type terminations. The signal contact 140 extends along a longitudinal axis 158, which is parallel to the signal element 136.

The ground contact 142 includes a base 160 and mounting elements 162 used to secure the ground contact 142 to the flexible film substrate 130. The base 160 is electrically connected to the ground element 138. In an exemplary embodiment, as will be described in further detail below, the mounting elements 162 mechanically secure the ground contact 142 to the flexible film substrate 130. For example, the mounting elements 162 may pierce through the flexible film substrate 130 and wrap around the second surface 134 of the flexible film substrate 130. Other types of mechanical fastening means or processes may be used in other embodiments to mechanically secure the ground contact 142 to the flexible film substrate 130.

The ground contact 142 includes a wire termination 164 extending from the base 160. The wire termination 164 is configured to be terminated to the cable braid 122 of the cable 116. In the illustrated embodiment, the wire termination 164 constitutes an insulation displacement type connection where the jacket 120 and cable braid 122 are loaded between barbs 166 that pierce or cut through the jacket 120 to mechanically and electrically engage the cable braid 122. In the illustrated embodiment, the wire termination 164 includes two sets of barbs 166 spaced apart from one another. The barbs 166 mechanically and electrically connect to two different areas of the cable braid 122 for increased stability and connection. The barbs 166 may be provided at opposite ends of the base 160. Other types of wire terminations are possible in alternative embodiments, including crimp type terminations. The ground contact 142 extends along a longitudinal axis 168, which is parallel to the ground element 138.

The ground contact 142 includes a strain relief element 170 configured to engage the jacket 120 of the cable 116. In the illustrated embodiment, the strain relief element 170 represents an interference type connection for holding the jacket 120. Other types of strain relief elements may be used in alternative embodiments to engage the jacket 120 and provide strain relief for the cable 116, such as a crimp connection. The strain relief element 170 helps to maintain a relative position of the cable 116 with respect to the signal and ground contacts 140, 142.

The strain relief element 170 includes a first spring beam 172 and a second spring beam 174. The first and second spring beams 172, 174 extend from opposite sides of the base 160 and face in opposite directions. The first and second spring beams 172, 174 are curled inward toward the cable 116. Distal ends 176, 178 of the first and second spring beams 172, 174 engage the jacket 120 to hold the jacket 120 in place relative to the base 160. The first and second spring beams 172, 174 define receiving spaces 180, 182, respectively, that receive the cable 116. The first and second spring beams 172, 174 are curved around the receiving spaces 180, 182. The receiving spaces 180, 182 are sized to receive a range of different gauge cables 116. When the cable 116 is loaded into the receiving spaces 180, 182, the first and second spring beams 172, 174 may be at least partially deflected outward, causing an inward spring bias toward the cable 116. The first and second spring beams 172, 174 thus hold the cable 116 by an interference engagement. While two spring beams 172, 174 are illustrated in Figure 5, any number of spring beams may be provided in alternative embodiments. Additionally, the spring beams 170, 172 may extend from the same side of the base 160 in an alternative embodiment.

Having the wire termination 164 engage the cable 116 at both ends of the base 160 allows the ground contact 142 to be electrically commoned with the cable braid 122 for a longer portion of the cable 116 than if the wire termination 164 only engaged the cable 116 at one position along the length of the cable 116. The strain relief element 170 is positioned between the two sets of barbs 166 such that the wire termination 164 is terminated to the cable 116 on both sides of the strain relief element 170. Having the strain relief element 170 positioned between the two sets of barbs 166 shortens the overall length of the ground contact 142, as compared to a ground contact in which the strain relief element 170 is positioned rearward of the rear set of barbs 166. Having the strain relief element 170 positioned between the two sets of barbs 166 additionally provides mechanical retention of the jacket 120 with respect to the wire termination 154.

During assembly, the mounting elements 152 are loaded through the flexible film substrate 130, and the signal contact 140 is pressed down on to the flexible film substrate 130 until the base 150 engages the signal element 136. The mounting elements 152 may have points at distal ends thereof that allow the mounting elements 152 to pierce the flexible film substrate 130. Alternatively, the flexible film substrate 130 may have slots or openings formed therethrough that receive the mounting elements 152. When loaded onto the flexible film substrate 130, the mounting elements 152 are configured to engage the second surface 134 of the flexible film substrate 130. The engagement of the mounting elements 152 to the second surface 134 retains the signal contact 140 on the flexible film substrate 130. In an exemplary embodiment, the mounting elements 152 may be folded or wrapped underneath the signal element 136 along the second surface 134. For example, the mounting elements 152 may be bent inward, such as in a manner similar to a staple, to secure the signal contact 140 to the flexible film substrate 130. The mounting elements 162 may be substantially similar to the mounting elements 152 and may be secured to the flexible film substrate 130 in a similar manner.

Wrapping the mounting elements 152, 162 under the second surface 134 forces the mounting elements 152, 162 against the second surface 134. Wrapping the mounting elements 152, 162 under the second surface 134 may force the corresponding bases 150, 160 against the first surface 132 and the signal and ground elements 136, 138, respectively. The mounting elements 152, 162 may also force the flexible film substrate 130 against the bases 150, 160 which may cause the signal element 136 and the ground element 138 to be pressed against the bases 150, 160 of the signal contact 140 and the ground contact 142, respectively. The flexible film substrate 130 may be at least partially compressed between the mounting elements 152, 162 and the bases 150, 160, respectively.

Pressing the mounting elements 152 against the second surface 134 of the flexible film substrate 130 generally compresses the signal element 136 against the signal contact 140. For example, the signal element 136 is pressed against the base 150 to ensure good electrical contact between the base 150 and the signal element 136. When assembled, the flexible film substrate 130 is captured between the base 150 and the mounting elements 152. The flexible film substrate 130 may be at least partially deflected or flexed inward when the mounting elements 152 are pressed closed. As such, a direct electrical connection is provided between the signal contact 140 and signal element 136, without the need for solder or epoxy. The signal contact 140 is mechanically self-secured to the flexible film substrate 130. No additional element or component is needed to make electrical or mechanical connection between the signal contact 140 and the signal element 136.

Pressing the mounting elements 162 against the second surface 134 of the flexible film substrate 130 generally compresses the ground element 138 against the ground contact 142. For example, the ground element 138 is pressed against the base 160 to ensure good electrical contact between the base 160 and the ground element 138. When assembled, the flexible film substrate 130 is captured between the base 160 and the mounting elements 162. The flexible film substrate 130 may be at least partially deflected or flexed inward when the mounting elements 162 are pressed closed. As such, a direct electrical connection is provided between the ground contact 142 and ground element 138, without the need for solder or epoxy. The ground contact 142 is mechanically self-secured to the flexible film substrate 130. No additional element or component is needed to make electrical or mechanical connection between the ground contact 142 and ground element 138.

## Claims

1. An antenna (12) terminated to a coaxial cable (16) having a center conductor (26) surrounded by a dielectric (24) and a cable braid (22), wherein the antenna (12) comprises:
a substrate (30) having first and second surfaces (32, 34), the substrate having a signal element (36) and a ground element (38) on the first surface, and a ground contact (42) having a base (60) mounted to the first surface of the substrate in electrical connection with the ground element, the ground contact having mounting elements (62) extending from the base, the ground contact having a wire termination (64) terminated to the cable braid of the coaxial cable,
**characterized by**:
the mounting elements (62) engaging the second surface such that the substrate is captured between the mounting elements and the base of the ground contact,
a signal contact (40) having a base (50) mounted to the first surface of the substrate in electrical connection with the signal element, the signal contact having mounting elements (52) extending from the base, the mounting elements engaging the second surface such that the substrate is captured between the mounting elements and the base of the signal contact, the signal contact having a wire termination (54) terminated to the center conductor of the coaxial cable,
the electrical connection between the base (60) of the ground contact (42) and the ground element (38) being a compression connection wherein the base (60) is pressed against the ground element (38) in direct electrical contact with the ground element (38), by the mounting elements (62) of the ground contact forcing the substrate against the base (60),
the electrical connection between the base (50) of the signal contact (40) and the signal element (36) being a compression connection wherein the base (50) is pressed against the signal element (36) in direct electrical contact with the signal element (36), by the mounting elements (52) of the signal contact forcing the substrate against the base (50),
the antenna being a flexible antenna and the substrate being a flexible film substrate.

2. The flexible antenna (12) of claim 1, wherein the mounting elements (52) of the signal contact engage the flexible film substrate (30) such that the flexible film substrate is captured between the mounting elements and the base (50) of the signal contact, and wherein the mounting elements (62) of the ground contact engage the flexible film substrate (30) such that the flexible film substrate is captured between the mounting elements and the base (60) of the ground contact.

3. The flexible antenna (12) of claim 1 or 2, wherein the mounting elements (52) of the signal contact are folded under the flexible film substrate (30) to compress the flexible film substrate between the mounting elements and the base (50) of the signal contact, and wherein the mounting elements (62) of the ground contact are folded under the flexible film substrate (30) to compress the flexible film substrate between the mounting elements and the base (60) of the ground contact.

4. The flexible antenna (12) of claim 1, 2, or 3, wherein the mounting elements (52) of the signal contact pierce through the flexible film substrate (30) to mechanically secure the signal contact to the flexible film substrate, and wherein the mounting elements (62) of the ground contact pierce through the flexible film substrate (30) to mechanically secure the ground contact to the flexible film substrate.

5. A wireless communication system (10) comprising the flexible antenna (12) of any preceding claim.

## Patentansprüche

1. Antenne (12), abgeschlossen an einem Koaxialkabel (16) mit einem von einem Dielektrikum (24) und einem Kabelgeflecht (22) umgebenen mittleren Leiter (26), wobei die Antenne (12) Folgendes umfasst:
ein Substrat (30) mit einer ersten und einer zweiten Oberfläche (32, 34), wobei das Substrat ein Signalelement (36) und ein Masseelement (38) auf der ersten Oberfläche hat, und einen Massekontakt (42) mit einer auf der ersten Oberfläche des Substrats in elektrischer Verbindung mit dem Masseelement montierten Basis (60), wobei der Massekontakt sich von der Basis erstreckende Montageelemente (62) hat, wobei der Massekontakt einen Drahtabschluss (64) hat, der am Kabelgeflecht des Koaxialkabels abgeschlossen ist,
**dadurch gekennzeichnet, dass**:
die Montageelemente (62) so an der zweiten Oberfläche angreifen, dass das Substrat zwischen den Montageelementen und der Basis des Massekontakts eingefangen wird,
ein Signalkontakt (40) eine auf der ersten Oberfläche des Substrats in elektrischer Verbindung mit dem Signalelement montierte Basis (50) hat, wobei der Signalkontakt sich von der Basis erstreckende Montageelemente (52) hat, wobei die Montageelemente so an der zweiten Oberfläche angreifen, dass das Substrat zwischen den Montagelementen und der Basis des Signalkontakts eingefangen wird, wobei der Signalkontakt einen Drahtabschluss (54) hat, der am mittleren Leiter des Koaxialkabels abgeschlossen ist,
die elektrische Verbindung zwischen der Basis (60) des Massekontakts (42) und dem Masseelement (38) eine Kompressionsverbindung ist, wobei die Basis (60) gegen das Masseelement (38) in direkten elektrischen Kontakt mit dem Masseelement (38) gepresst wird, indem die Montageelemente (62) des Massekontakts das Substrat gegen die Basis (60) zwingen,
die elektrische Verbindung zwischen der Basis (50) des Signalkontakts (40) und dem Signalelement (36) eine Kompressionsverbindung ist, wobei die Basis (50) gegen das Signalelement (36) in direkten elektrischen Kontakt mit dem Signalelement (36) gespresst wird, indem die Montageelemente (52) des Signalkontakts das Substrat gegen die Basis (50) zwingen,
die Antenne eine flexible Antenne ist und das Substrat ein flexibles Foliensubstrat ist.

2. Flexible Antenne (12) nach Anspruch 1, wobei die Montageelemente (52) des Signalkontakts so an dem flexiblen Foliensubstrat (30) angreifen, dass das flexible Foliensubstrat zwischen den Montageelementen und der Basis (50) des Signalkontakts eingefangen wird, und wobei die Montageelemente (62) des Massekontakts so an dem flexiblen Foliensubstrat (30) angreifen, dass das flexible Foliensubstrat zwischen den Montageelementen und der Basis (60) des Massekontakts eingefangen wird.

3. Flexible Antenne (12) nach Anspruch 1 oder 2, wobei die Montageelemente (52) des Signalkontakts unter dem flexiblen Foliensubstrat (30) gefaltet werden, um das flexible Foliensubstrat zwischen den Montageelementen und der Basis (50) des Signalkontakts zu komprimieren, und wobei die Montageelemente (62) des Massekontakts unter dem flexiblen Foliensubstrat (30) gefaltet werden, um das flexible Foliensubstrat zwischen den Montageelementen und der Basis (60) des Massekontakts zu komprimieren.

4. Flexible Antenne (12) nach Anspruch 1, 2 oder 3, wobei die Montageelemente (52) des Signalkontakts das flexible Foliensubstrat (30) durchstoßen, um den Signalkontakt mechanisch am flexiblen Filmsubstrat zu befestigen, und wobei die Montageelemente (62) des Massekontakts das flexible Foliensubstrat (30) durchstoßen, um den Massekontakt mechanisch am flexiblen Foliensubstrat zu befestigen.

5. Drahtloses Kommunikationssystem (10), das die flexible Antenne (12) nach einem vorherigen Anspruch umfasst.

## Revendications

1. Antenne (12) terminée sur un câble coaxial (16) ayant un conducteur central (26) entouré d'un diélectrique (24) et d'une tresse de câble (22), l'antenne (12) comprenant :
un substrat (30) ayant des première et deuxième surfaces (32, 34), le substrat possédant un élément à signaux (36) et un élément de terre (38) sur la première surface, et un contact de terre (42) possédant une base (60) montée sur la première surface du substrat en connexion électrique avec l'élément de terre, le contact de terre possédant des éléments de montage (62) qui s'étendent à partir de la base, le contact de terre possédant une terminaison à fil (64) terminée sur la tresse de câble du câble coaxial,
**caractérisée par** :
**le fait que** les éléments de montage (62) s'emboîtent avec la deuxième surface de telle sorte que le substrat soit capturé entre les éléments de montage et la base du contact de terre,
un contact à signaux (40) qui possède une base (50) montée sur la première surface du substrat en connexion électrique avec l'élément à signaux, le contact à signaux possédant des éléments de montage (52) qui s'étendent à partir de la base, les éléments de montage s'emboîtant avec la deuxième surface de telle sorte que le substrat soit capturé entre les éléments de montage et la base du contact à signaux, le contact à signaux possédant une terminaison à fil (54) terminée sur le conducteur central du câble coaxial,
**le fait que** la connexion électrique entre la base (60) du contact de terre (42) et l'élément de terre (38) est une connexion par compression, cas dans lequel la base (60) est pressée contre l'élément de terre (38) en contact électrique direct avec l'élément de terre (38), par les éléments de montage (62) du contact de terre qui forcent le substrat contre la base (60),
**le fait que** la connexion électrique entre la base (50) du contact à signaux (40) et l'élément à signaux (36) est une connexion par compression, cas dans lequel la base (50) est pressée contre l'élément à signaux (36) en contact électrique direct avec l'élément à signaux (36), par les éléments de montage (52) du contact à signaux qui forcent le substrat contre la base (50),
**le fait que** l'antenne est une antenne flexible et le substrat est un substrat à pellicule flexible.

2. Antenne flexible (12) selon la revendication 1, les éléments de montage (52) du contact à signaux s'emboîtant avec le substrat à pellicule flexible (30) de telle sorte que le substrat à pellicule flexible soit capturé entre les éléments de montage et la base (50) du contact à signaux, et cas dans lequel les éléments de montage (62) du contact de terre s'emboîtent avec le substrat à pellicule flexible (30) de telle sorte que le substrat à pellicule flexible soit capturé entre les éléments de montage et la base (60) du contact de terre.

3. Antenne flexible (12) selon la revendication 1 ou 2, les éléments de montage (52) du contact à signaux étant repliés sous le substrat à pellicule flexible (30) afin de comprimer le substrat à pellicule flexible entre les éléments de montage et la base (50) du contact à signaux, et cas dans lequel les éléments de montage (62) du contact de terre sont repliés sous le substrat à pellicule flexible (30) afin de comprimer le substrat à pellicule flexible entre les éléments de montage et la base (60) du contact de terre.

4. Antenne flexible (12) selon la revendication 1, 2 ou 3, les éléments de montage (52) du contact à signaux perçant à travers le substrat à pellicule flexible (30) afin d'assujettir mécaniquement le contact à signaux sur le substrat à pellicule flexible, et cas dans lequel les éléments de montage (62) du contact de terre percent à travers le substrat à pellicule flexible (30) afin d'assujettir mécaniquement le contact de terre sur le substrat à pellicule flexible.

5. Système de communication sans fil (10) comprenant l'antenne flexible (12) selon n'importe quelle revendication précédente.
